# EUROPEAN PATENT APPLICATION

(11) **EP 1 063 844 A1**
(43) Date of publication of application: **27.12.2000**
(21) Application number: 99905186.5
(22) Date of filing: 10.02.1999
(51) Int. Cl.: H04N 5/335, H01L 27/148, H01L 21/027, G01B 11/00

(54) **METHOD OF DRIVING SOLID-STATE IMAGING DEVICE, IMAGING DEVICE, ALIGNMENT DEVICE, AND ALIGNING METHOD**

(30) Priority: 10.02.1998 JP 2799398
(71) Applicant: Nikon Corporation, Tokyo 100-8831 (JP)
(72) Inventor: AKAGAWA, Keiichi, Nikon Corporation Intellectual, Chiyoda-ku, Tokyo 100-8331 (JP); KOMAI, Atsushi, Nikon Corporation Intellectual, Chiyoda-ku, Tokyo 100-8331 (JP)
(74) Representative: Volpert, Marcus, Dr.
(86) International application number: JP9900561
(87) International publication number: WO9941904

(57) **Abstract**

According to the invention, an image signal suitable for purposes such as detection of alignment of an exposure device can be quickly generated by vertically adding pixel outputs under vertical transfer.

The invention also makes it possible to adjust an output level of an image signal adequately by changing the number of vertical transfers with flexibility.

Further, according to the invention, since exhaust gates are provided on vertical transfer paths to selectively exhaust pixel outputs unnecessary for the generation of a one-dimensional image, the quality of signals of a one-dimensional image can be further improved.

Further, according to the invention, since a two-dimensional image is read on an experimental basis using the same image sensor to automatically specify the positions of pixels unnecessary for the generation of a one-dimensional image, thereby improving the quality of signals of a one-dimensional image simply and reliably.

## Description

### TECHNICAL FIELD

The present invention relates to a method of driving a solid-state image sensor which is particularly suitable for purposes such as detection of alignment of an exposure device.

The present invention relates to an image sensing device for performing such a method of driving.

The present invention relates to an alignment device for detecting alignment of an object based on an image which has been picked up.

The present invention relates to a position adjustment method of adjusting the position of an object whose image is to be picked up based on the result of alignment detection.

### BACKGROUND ART

An exposure device for exposing circuit patterns is used in steps for manufacturing semiconductor devices, liquid crystal displays and the like. An exposure device of this type must perform accurate position adjustment at each exposure operation because it exposes fine circuit patterns a plurality of times in an overlapping relationship. In order to perform such position adjustment, an exposure device incorporates a highly accurate position adjustment mechanism.

Known conventional position adjustment mechanisms of this type include mechanisms which pick up an alignment mark on a sample and adjust the position of the sample based on the result of the pick up (so-called image sensing type position adjustment mechanisms).

Fig. 14A is a schematic view of an example of such alignment marks. Alignment marks MXn and MYn are constituted by patterns in the form of five stripes. Separate image sensing devices for X- and Y-directions are provided to sense such alignment marks Mxn and MYn, respectively.

Fig. 15 is an abstract diagram of an image sensing device incorporated in an exposure device showing a circuit configuration thereof.

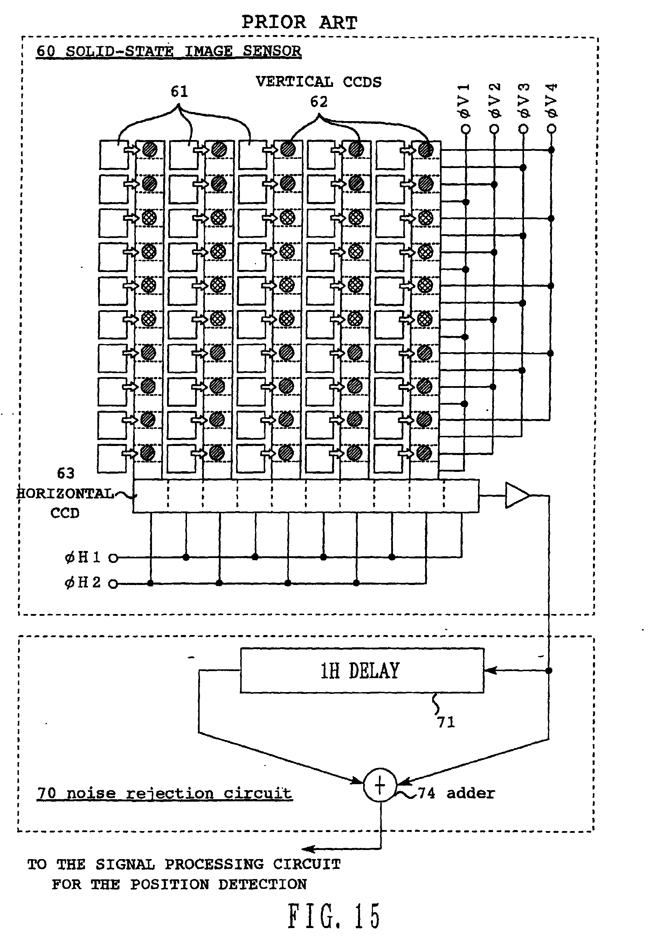

As shown in Fig. 15, the image sensing device is generally constituted by a solid-state image sensor 60 and a noise rejection circuit 70. A plurality of photodiodes 61 are arranged in the form of a matrix on an image surface of the solid-state image sensor 60 (Fig. 15 shows photodiodes 61 in ten rows by five columns for a simple description).

Vertical CCDs 62 are provided adjacent to each vertical column of photodiodes 61. Vertical transfer pulses φV1 through φV4 in four phases are applied to transfer electrodes of the vertical CCDS 62. Referring to transfer electrodes to which the vertical pules φV2 and φV4 are applied, the electrodes are extended to transfer diffusions interposed between the photodiodes 61 and the vertical CCDS 62. As a result, those transfer electrodes also serve as transfer gate electrodes.

A horizontal CCD 63 is provided along output ends of the plurality of vertical CCDs 62. Horizontal transfer pulses φH1 and φH2 in two phases are applied to a transfer electrode of the horizontal CCD 63. A transfer output from the horizontal CCD 63 is output from the solid-state image sensor 60 through an output amplifier or the like.

The noise rejection circuit 70 is constituted by a 1H delay circuit 71 and an adder 74. The 1H delay circuit 71 delays a transfer output from the solid-state image sensor 60 by one horizontal period. The adder 74 adds the transfer output and the delayed output from the 1H delay circuit 71 and outputs the result.

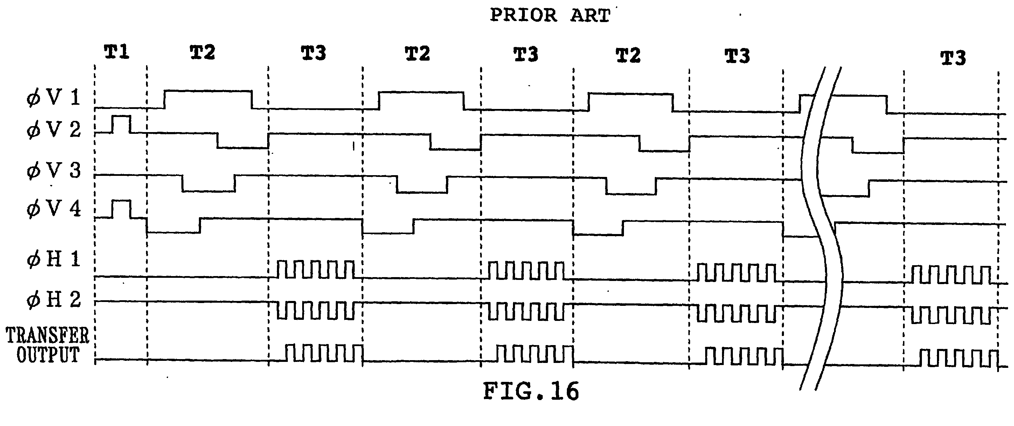

Fig. 16 is a diagram showing timing for driving the solid-state image sensor 60 according to the prior art (two line mixture type interlace scanning).

The timing for driving the solid-state image sensor 60 will now be described with reference to Fig. 16.

The vertical transfer pulses φV2 and φV4 are set at a high potential (e.g., 10 volts) at the timing of a vertical interval period T1 as shown in Fig. 16. Then, channels are formed between all of the photodiodes 61 and vertical CCDs 62 to transfer signal charges accumulated at the photodiodes 61 to the vertical CCDS 62 at a time.

Either of the vertical transfer pulse φV1 and φV3 is set at an intermediate potential (e.g., 2 volts) during the vertical interval period T1. As a result, a plurality of potential wells for three transfer electrodes are formed above the vertical CCDs 62. In each of the potential wells, signal charges for vertical two pixels transferred thereto are mixed to generate a two line mixture signal suitable for interlace scanning.

Next, the vertical transfer pulses φV1 through φV4 are set as transfer pulses in four phases (e.g., pulses whose low level is about -10 V and whose high level is about 2 V) at the timing of a horizontal interval period T2 as shown in Fig. 16. Then, the potential wells on the vertical CCDs 62 are shifted toward the horizontal CCD 63 by two rows. At this time, signal charges for the first and second rows are output from the output ends of the vertical CCDS 62 to be transferred to the potential wells on the horizontal CCD 63.

Next, the horizontal transfer pulses φH1 and φH2 are set as transfer pulses in two phases at the timing of a horizontal scanning period T3 as shown in Fig. 16. Then, the potential wells on the horizontal CCD 63 are sequentially shifted. As a result of such a shift of the potential wells, transfer outputs are output from the output end of the horizontal CCD 63 in a serial manner.

The solid-state image sensor 60 outputs an image for one field by alternately repeating the vertical transfer operation during the horizontal interval period T2 and the horizontal transfer operation during the horizontal scanning period T3 as described above.

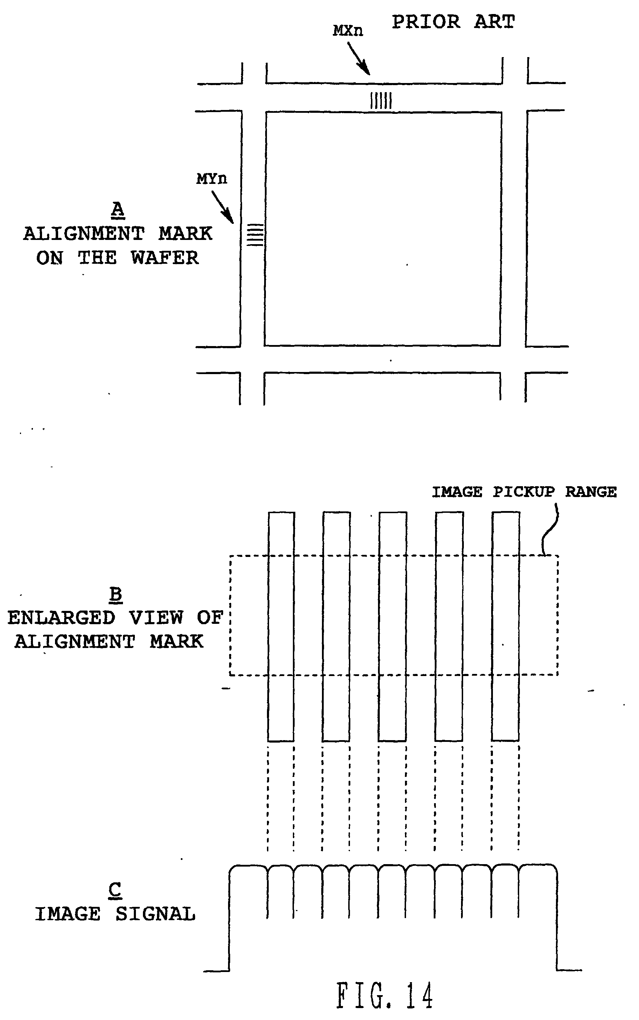

Fig. 14C is a diagram showing a transfer output for one horizontal period output by the solid-state image sensor 60 at this time. The transfer output is an image signal whose signal level undergoes a wedge-shaped reduction at the edge of the step of the alignment mark shown in Fig. 14B.

The noise rejection circuit 70 receives such transfer outputs from the solid-state image sensor 60 and sequentially adds transfer outputs for two horizontal periods. This results in a reduction of vertically non-correlated noise components by 3 dB in terms of the signal-to-noise ratio and therefore results in a relative improvement of the S/N of transfer outputs.

Transfer outputs from such a noise rejection circuit 70 are output in the following order. Specifically, a mixture signal for the first through fourth rows is output; a mixture signal for the third through sixth rows follows; a mixture signal for the fifth through eighth rows follows; and a mixture signal for the seventh through tenth rows follows.

A signal processing circuit (not shown) in the position adjustment mechanism sequentially receives the above-described transfer outputs to detect the phase of the wedge-shaped portion in the transfer output. The position adjustment mechanism accurately adjusts the position of the exposure device based on the phase of the wedge-shaped portion.

### DISCLOSURE OF THE INVENTION

### [Problems to be Solved by the Invention]

In the above-described example of the prior art, external circuits such as the noise rejection circuit 70 are provided outside the solid-state image sensor 60. A problem has arisen in that such external circuits make the circuit configuration complicated accordingly.

Further, it takes one field period (one frame period in the case of progressive scanning) to read an image of an alignment mark from the solid-state image sensor 60. Such a reading operation is repeated many times each time the exposure device performs an exposure operation. This has resulted in a problem in that the throughput of the exposure device is reduced in an amount corresponding to the total time required for the reading operation.

Furthermore, as apparent from the above-described order of signal output, duplicate signals are output for a single row as an output of the noise rejection circuit 70. For example, the signal for the third line is included in both of the mixture signal for the first through fourth rows and the mixture signal for the third through sixth rows and is therefore output twice. The mixture signals output by the noise rejection circuit 70 have high redundancy and, therefore, a great amount number of ineffective signals are included accordingly.

This increases burdens on subsequent signal processing and increases the processing time required for the detection of the position of an alignment mark. Such a position detecting process is also repeated many times each time the exposure device performs an exposure operation. This has resulted in another problem in that the throughput of the exposure device is reduced in an amount corresponding to the total time required for the position detecting process.

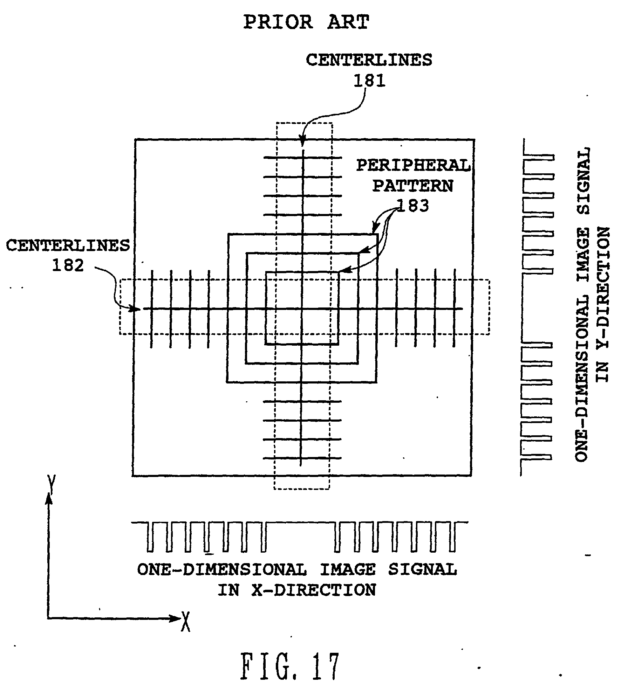

More specifically speaking, the above-described alignment mark includes patterns such as centerlines 181 and 182 shown in Fig. 17. In this case, pixel outputs from the centerlines 181 and 182 do not have any shaded pattern which is effective for alignment detection.

This has resulted in a problem in that the quality of signals of a picked up image is reduced because of a resultant reduction in the contrast of the picked up image and because of the fact that the centerlines 181 and 182 are added as extra noise components. Therefore, alignment detection as described above results in a problem in that position detecting accuracy is reduced accordingly.

Further, various alignment marks are used for actual alignment detection. Therefore, the image pickup range of the image sensing device (the range indicated by the dotted line in Fig. 17) must be minutely adjusted each time the type and size of the alignment mark are changed, which has resulted in a problem in that a great amount of time and labor is required.

A possible solution to avoid such time and labor is to provide in advance an image pickup range which is commonly used regardless of the type of alignment mark. However, such a solution can result in a situation in which a peripheral pattern 183 as shown in Fig. 17 and the like are included in the image pickup range.

Similarly to the centerlines 181 and 182, such a peripheral pattern 183 does not have any shaded pattern effective for alignment detection. This results in a problem in that the quality of signals of an image which has been picked up is further reduced.

As defined in Claims 1, 2, 4 and 5, it is an object of the invention to simplify the configuration of an image sensing device and to improve the throughput of an image sensing device.

As defined in Claims 3 and 6, in addition to the object of Claim 1, it is an object of the invention to adjust an image output to an adequate level automatically.

As defined in Claim 7, it is an object of the invention to improve the quality of signals of a one-dimensional image (to be described afterward).

As defined in Claims 8 and 9, in addition to the object of Claim 7, it is an object of the invention to provide an image sensing device capable of automatically detecting the position of a pixel which is not required for the generation of a one-dimensional image.

As defined in Claim 10, it is an object of the invention to provide an alignment device utilizing an image sensing device as defined in Claims 4 through 9.

As defined in Claim 11, it is an object of the invention to provide a position adjustment method utilizing an image sensing device as defined in Claims 4 through 9.

### [Means for Solving the Problems]

### (Claim 1)

The invention described in claim 1 is a method of driving a solid-state image sensor including a plurality of horizontally and vertically arranged light receiving pixels for generating signal charges in accordance with the quantity of light, vertical CCDs for vertically transferring said signal charges generated by said light receiving pixels, and a horizontal CCD for horizontally transferring said signal charges transferred through said vertical CCDs, comprising the step of:
a vertical transfer step for vertically transferring in sequence said signal charges generated by a light receiving part by driving said vertical CCDs; and
a horizontal transfer step for mixing said signal charges transferred through said vertical CCDs on said horizontal CCD and horizontally transferring said signal charges on said horizontal CCD when said signal charges for three or more vertical pixels are mixed.

According to the above-described driving method, horizontal transfer is performed after signal charges for three or more vertical pixels are mixed on a horizontal CCD. This makes it possible to delete at least one horizontal scanning period T3 among horizontal interval periods T2 and horizontal scanning periods T3 which have been indispensably implemented according to the prior art (Fig. 16). It is therefore possible to reduce the time required for reading an image of an alignment mark.

Since signal charges for three or more vertical pixels are mixed on a horizontal CCD, vertically non-correlated noise components can be reduced. This eliminates any particular need for noise rejecting means such as a noise rejection circuit 70 which has had to be provided outside a solid-state image sensor according to the prior art and makes it possible to simplify the configuration of a device as a whole.

Further, since signal charges for three or more vertical pixels are mixed on a horizontal CCD, the number of horizontal lines transferred and output from a solid-state image sensor is reduced. This efficiently and adequately reduce the amount of subsequent image signal processing (e.g., the amount of arithmetic processing for detecting the position of an alignment mark), allowing the processing time to be reduced.

### (Claim 2)

The invention described in claim 2 is a method of driving according to Claim 1, wherein said horizontal transfer step mixes said signal charges in a vertical direction with a limitation to the number of times the mixing is done being equal to or less than a number of vertical transfers which does not cause saturation of each potential well on said horizontal CCD.

According to such a driving method, saturation of signal charges on a horizontal CCD is avoided by setting an adequate number of vertical transfers, to be performed. This eliminates the possibility of losing a wedge-shaped portion of an alignment mark or the like from a transfer output. It is therefore possible to provide a transfer output suitable for the purpose of position detection.

### (Claim 3)

The invention described in claim 3 is a method of driving according to Claim 1, further comprising the step of:
a level detection step for monitoring a transfer output provided by said horizontal CCD to detect a signal level of said transfer output; and
a number adjustment step for increasing and decreasing the number of vertical transfers per one horizontal transfer in accordance with said signal level detected at said level detection step.

According to such a driving method, the number of vertical transfer per one horizontal transfer is dynamically adjusted in accordance with the signal level of a transfer output from a horizontal CCD. In this case, an inference is made from the signal level of the current horizontal line to adjust the next (and thereafter) signal level.

Therefore, in the case of an image having no vertical correlation like a natural image or an image whose luminance level changes as time passes, adequate level adjustment can not be expected because the result of an inference of a signal level is not necessarily correct.

In the case of an alignment mark which is a primary object whose image is to be picked up according to the invention, however, substantially no vertically non-correlated component is included, and the luminance level is substantially stable.

It is therefore possible to make a proper inference on the signal level of the next (and thereafter) horizontal line from the signal level of the current horizontal line to adjust the number of vertical transfers adequately.

### (Claim 4)

The invention described in claim 4 is an image sensing device comprising:
a plurality of horizontally and vertically arranged light receiving pixels for generating signal charges in accordance with the quantity of light;
vertical CCDs for vertically transferring said signal charges generated by said light receiving pixels;
a horizontal CCD for horizontally transferring said signal charges transferred through said vertical CCDs;
a vertical transfer circuit for vertically transferring in sequence said signal charges generated at a light receiving part by driving said vertical CCDs; and
a horizontal transfer circuit for mixing said signal charges transferred through said vertical CCDs on said horizontal CCD and for horizontally transferring said signal charges on said horizontal CCD when said signal charges for three or more vertical pixels are mixed.

An image sensing device having the above-described configuration executes the driving method defined in Claim 1.

### (Claim 5)

The invention described in claim 5 is an image sensing device according to Claim 4, wherein said horizontal transfer circuit mixes said signal charges in a vertical direction with a limitation to the number of times the mixing is done being equal to or less than a number of vertical transfers which does not cause saturation of each potential well on said horizontal CCD.

An image sensing device having the above-described configuration executes the driving method defined in Claim 2.

### (Claim 6)

The invention described in claim 6 is an image sensing device according to Claim 4, further comprising:
a level detector for monitoring a transfer output provided by said horizontal CCD to detect a signal level of said transfer output; and
number adjustment means for increasing and decreasing the number of vertical transfers per one horizontal transfer in accordance with said signal level detected at said level detector.

An image sensing device having the above-described configuration executes the driving method defined in Claim 3.

### (Claim 7)

The invention described in claim 7 is an image sensing device comprising:
a plurality of light receiving pixels arranged on a two-dimensional basis on a light receiving surface for generating pixel outputs in accordance with the quantity of light;
a group of vertical transfer paths provided for each of vertical columns of said light receiving pixels for transferring said pixel outputs generated at said light receiving pixels in a vertical direction;
a horizontal transfer path for transferring pixel outputs provided by said group of vertical transfer paths in a horizontal direction;
a one-dimensional readout unit for adding said pixel outputs sequentially transferred by said group of vertical transfer paths in the vertical direction and for reading a pixel output as a result of the addition from said horizontal transfer path to generate a one-dimensional image; and
an exhaust gate for selectively exhausting pixel outputs being transferred in said vertical transfer paths, wherein
said one-dimensional readout unit exhausts said pixel outputs generated at predetermined pixel positions through said exhaust gate during said operation of generating a one-dimensional image.

In the above-described configuration, for example, the centerline 182 in Fig. 17 and the like are set at "predetermined pixel positions". Then, a pixel output generated at the centerline 182 is exhausted from an exhaust gate during a vertical transfer.

As a result, no heterogeneous luminance distribution is added to a one-dimensional image, which makes it possible to avoid any reduction of contrast or S/N of the one-dimensional image.

Thus, according to the present invention, the quality of signals of a one-dimensional image can be improved by exhausting pixel outputs during vertical transfers selectively.

### (Claim 8)

The invention described in claim 8 is an image sensing device according to Claim 7, further comprising:
a two-dimensional readout unit for transferring said pixel outputs of said light receiving pixels through said group of vertical transfer paths and said horizontal transfer path to generate a two-dimensional image prior to said operation of generating a one-dimensional image; and
an image analysis unit for receiving said two-dimensional image from said two-dimensional readout unit and for detecting the positions of pixels having low vertical correlation based on a pattern of said two-dimensional image, wherein
said pixel outputs generated at the positions of pixels having low vertical correlation and detected by said image analysis unit are exhausted through said exhaust gate during said operation of generating a one-dimensional image.

In the above-described configuration, a two-dimensional readout unit reads out a two-dimensional image on an experimental basis prior to an operation of generating a one-dimensional image.

An image analysis unit detects the position of a pixel having low vertical correlation based on the pattern of the two-dimensional image. As a result, the positions of pixels with a heterogeneous luminance distribution in the vertical direction where the centerline 182 shown in Fig. 17, foreign substances, scratches, and the like exist are properly specified.

The one-dimensional readout unit exhausts a pixel output of a pixel position thus specified. Therefore, no heterogeneous luminance distribution is added to the one-dimensional image, which makes it possible to improve the quality of a signal from the one-dimensional image reliably.

### (Claim 9)

The invention described in claim 9 is an image sensing device according to Claim 7, further comprising:
a two-dimensional readout unit for transferring said pixel outputs of said light receiving pixels through said group of vertical transfer paths and said horizontal transfer path to generate a two-dimensional image prior to said operation of generating a one-dimensional image; and
an unnecessary pixel specifying unit for performing pattern matching between said two-dimensional image and a registered pattern to find the type of said two-dimensional image or positional relationship, thereby specifying the positions of pixels unnecessary for the generation of a one-dimensional image which are defined in advance in said registered pattern, wherein
said pixel outputs generated at the positions of pixels unnecessary for the generation of a one-dimensional image specified by said unnecessary pixel specifying unit are exhausted through said exhaust gate during said operation of generating a one-dimensional image.

In the above-described configuration, the two-dimensional readout unit reads out a two-dimensional image on an experimental basis prior to an operation of generating a one-dimensional image.

An unnecessary pixel specifying unit performs pattern matching between the two-dimensional. image and a registered pattern. Such pattern matching makes it possible, for example, to determine the type of the two-dimensional image and to detect "the accurate position of a pattern on the two-dimensional image".

The positions of pixels which are not required for the generation of the one-dimensional image are defined in advance in the registered patterns.

The unnecessary pixel specifying unit specifies the positions of unnecessary pixels on the two-dimensional image through coordinate transformation calculations based on the result of the above pattern matching and the positions of unnecessary pixels defined in advance in the registered patterns.

This makes it possible to properly specify the positions of heterogeneous pixels such as the centerline 182 shown in Fig. 17 which can cause a reduction of contrast.

The one-dimensional readout unit exhausts pixel outputs of the pixel positions thus specified. Therefore, no heterogeneous luminance distribution is added to the one-dimensional image, which makes it possible to improve the quality of a signal from the one-dimensional image reliably.

### (Claim 10)

The invention described in claim 10 is an alignment device comprising:
an image sensing device as defined in any one of Claims 4 through 9; and
an alignment detecting unit for picking up an image of an alignment mark using said image sensing device and for detecting alignment of an object whose image is to be picked up based on an image read out from said image sensing device.

### (Claim 11)

The invention described in claim 11 is a method of adjusting position comprising the step of:
an image pickup step for picking up an image of an alignment mark using an image sensing device as defined in any one of Claims 4 through 9 to generate an image signal;
a position detection step for finding the position of said alignment mark based on said image signal; and
a position adjustment step for controlling the position or an object whose image is to be picked up in accordance with the position of said alignment mark.

### BRIEF DESCRIPTION OF THE DRAWINGS

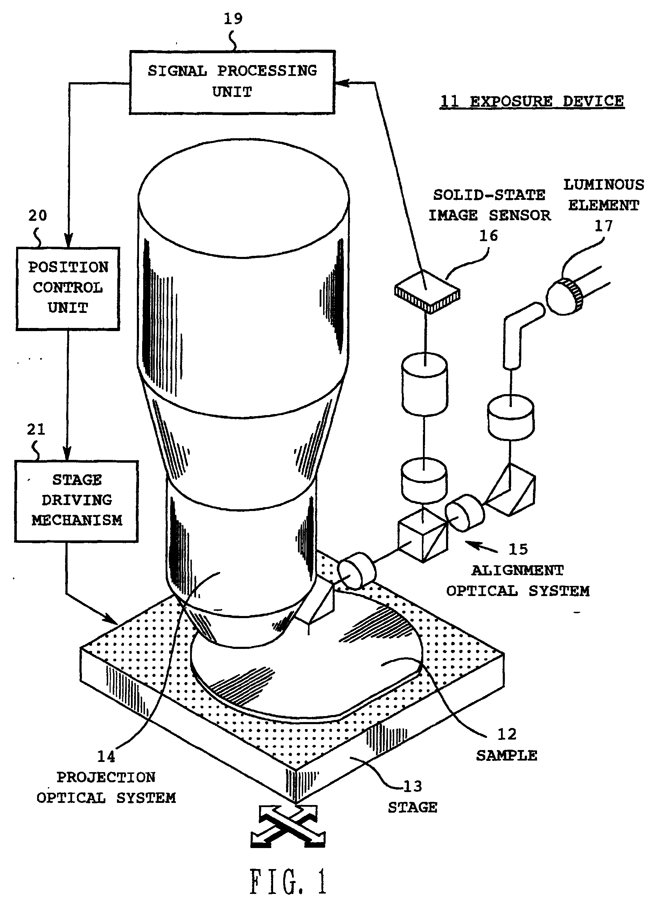

Fig. 1 is a diagram showing a schematic configuration of a first mode for carrying out the invention.

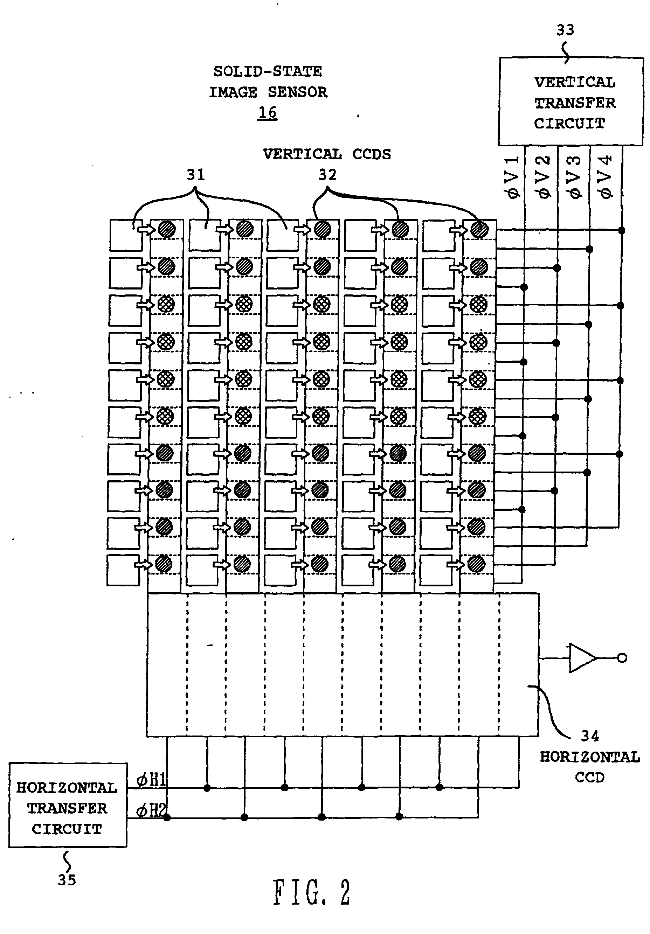

Fig. 2 is a diagram showing an internal configuration of a solid-state image sensor 16.

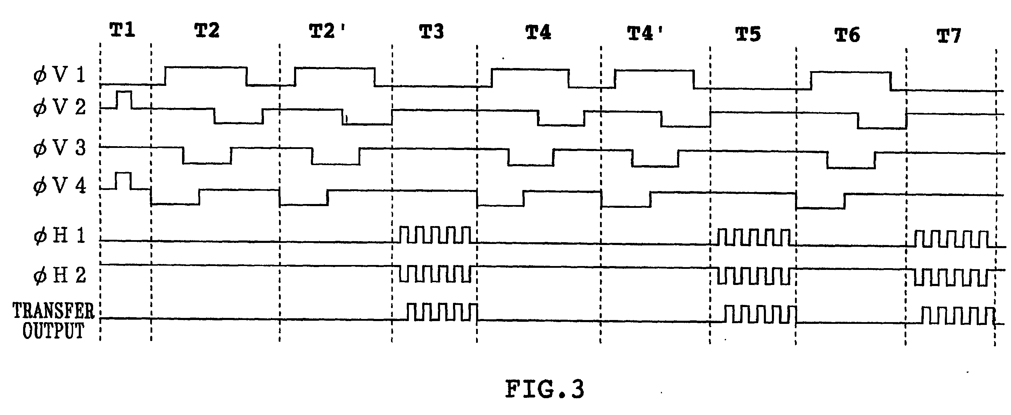

Fig. 3 is a diagram showing timing for driving the solid-state image sensor 16 in the first mode for carrying out the invention.

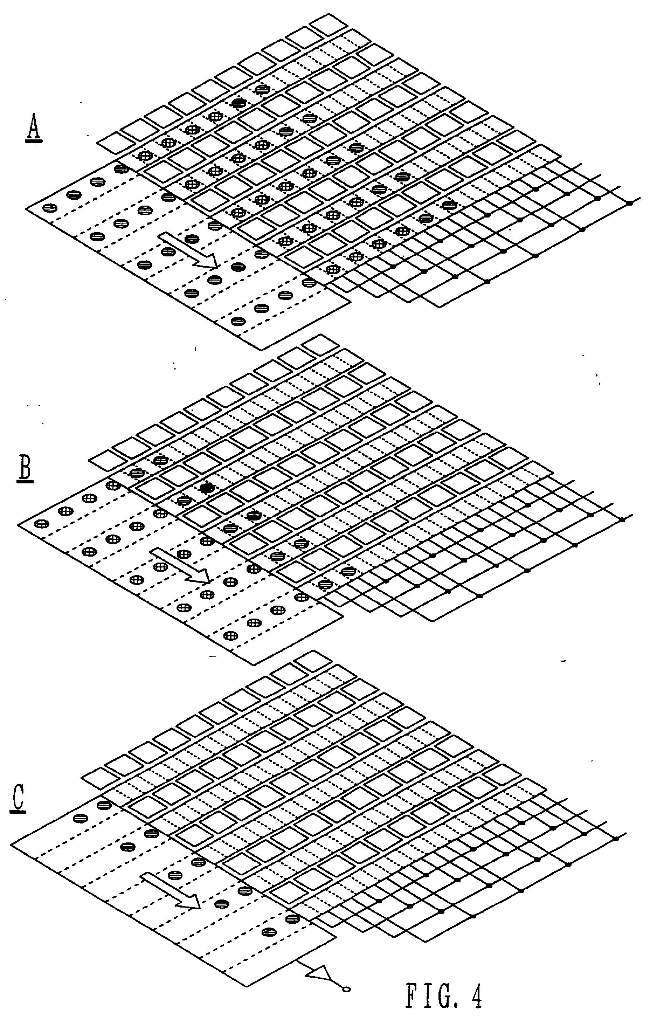

Fig. 4 is a diagram for explaining a charge transferring state of the solid-state image sensor 16 in the first mode for carrying out the invention.

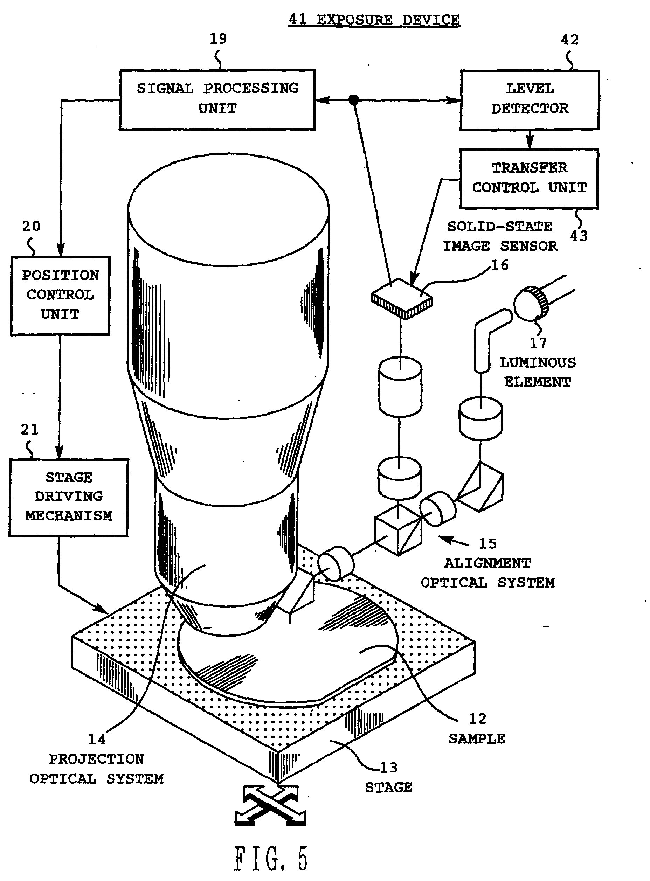

Fig. 5 is a diagram showing a schematic configuration of a second mode for carrying out the invention.

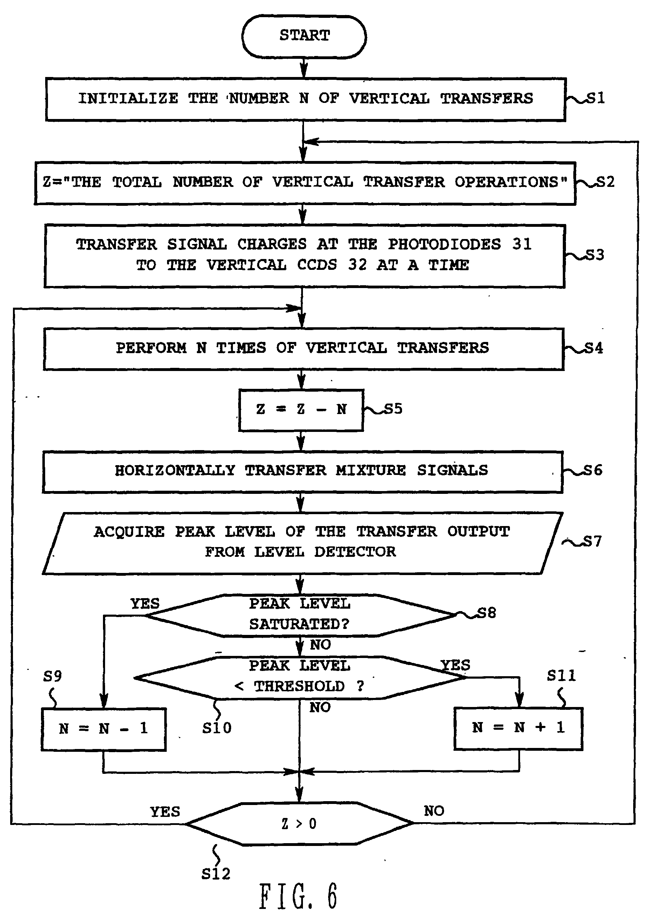

Fig. 6 is a flow chart for explaining an operation of a transfer control unit 43 in the second mode for carrying out the invention.

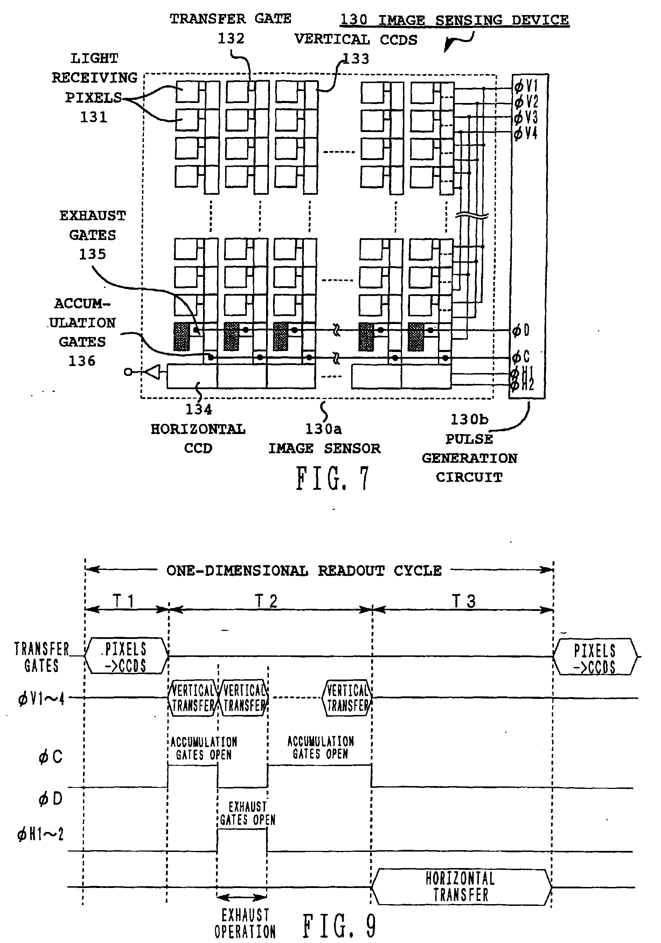

Fig. 7 is a diagram showing a configuration of an image sensing device 130 in a third mode for carrying out the invention.

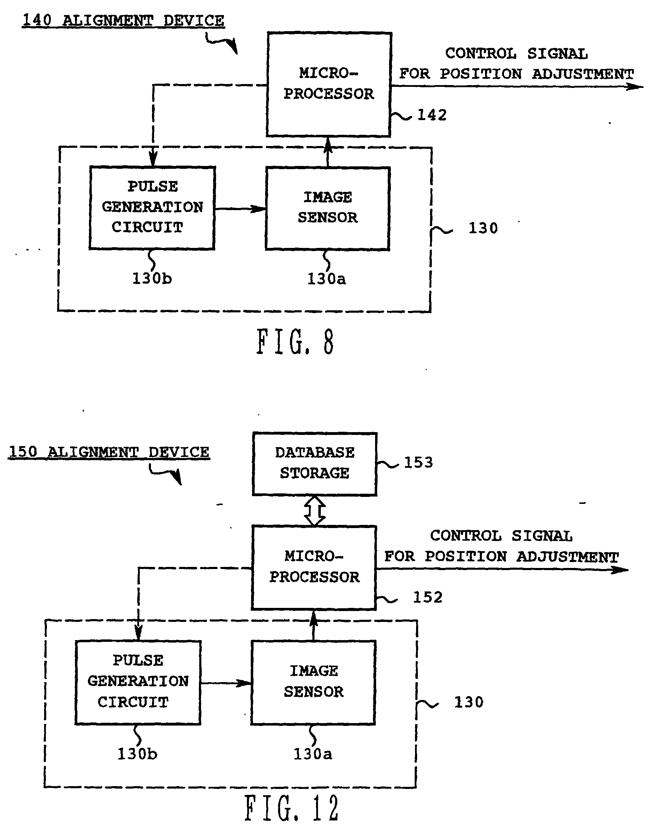

Fig. 8 is a block diagram showing a configuration of an alignment device 140.

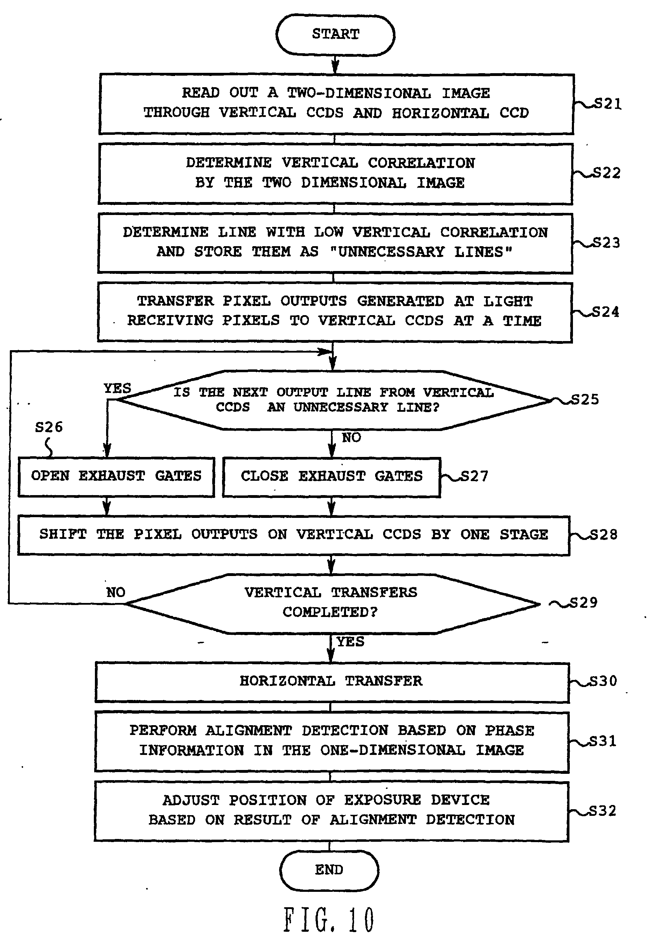

Fig. 9 is a timing chart of a one-dimensional readout operation in the third mode for carrying out the invention.
Fig. 10 is a flow chart showing an operation of a microprocessor 142 in a fourth mode for carrying out the invention.

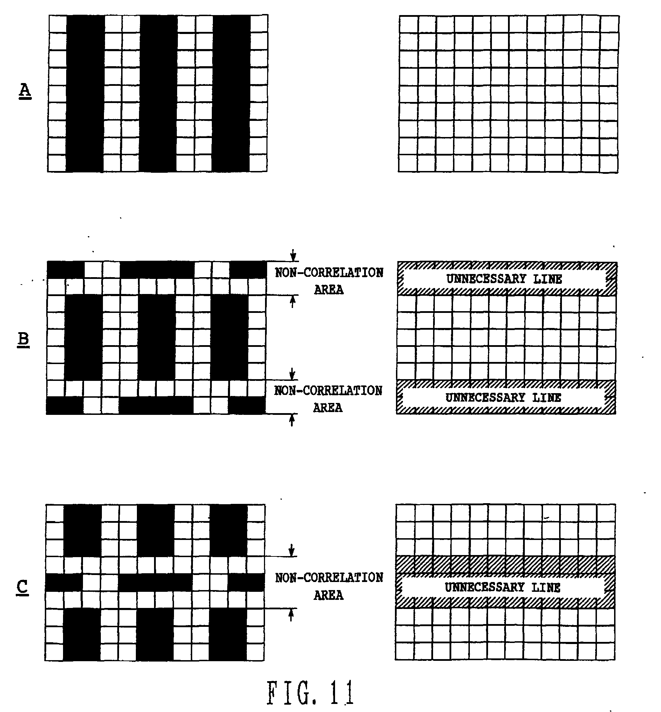

Fig. 11 is a diagram for explaining an example of detection of unnecessary lines.

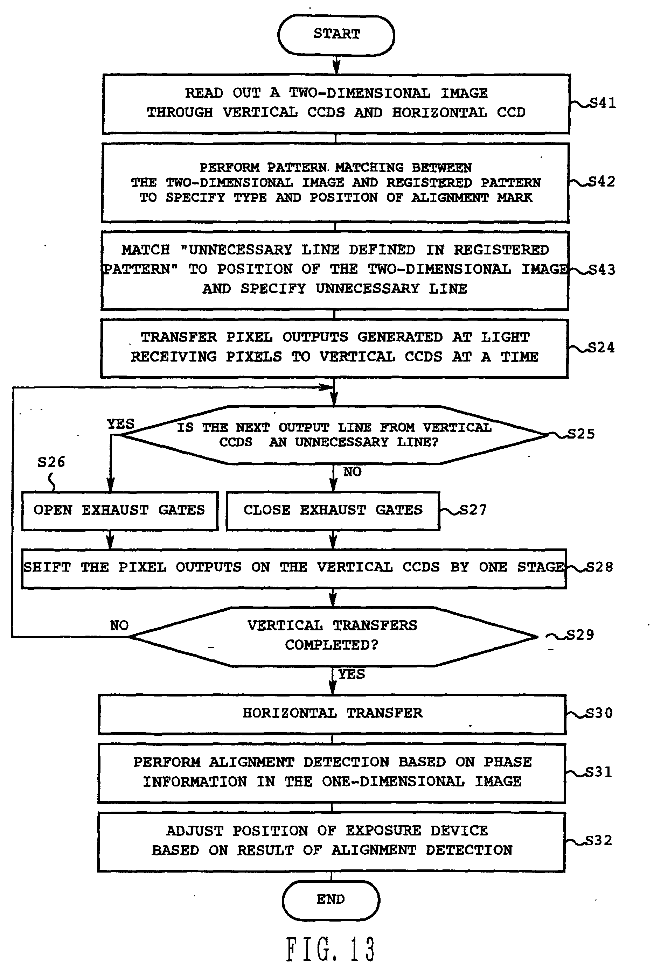

Fig. 12 is a block diagram showing a configuration of an alignment device 150 in a fifth mode for carrying out the invention.
Fig. 13 is a flow chart showing an operation of a microprocessor 152 in the fifth mode for carrying out the invention.
Fig. 14 is a diagram showing examples of alignment marks MXn and MYn.
Fig. 15 is a diagram showing an example of an image sensing device for detecting alignment according to the prior art.
Fig. 16 is a diagram showing driving timing according to the prior art.
Fig. 17 is a detailed diagram showing an example of an alignment mark.

### BEST MODES FOR CARRYING OUT THE INVENTION

Modes for carrying out the invention will now be described with reference to the drawings.

### 〈First Mode for Carrying out the Invention〉

A first mode for carrying out the invention is a mode for carrying out the invention corresponding to Claims 1, 2, 4, 5, 10 and 11.

Fig. 1 is a diagram showing a schematic configuration of the first mode for carrying out the invention.

Referring to Fig. 1, an exposure device 11 is formed by a stage 13 on which a sample 12 to be exposed is placed, a projection optical system 14 for projecting a circuit pattern and the like upon the sample 12 and the like.

One end of an alignment optical system 15 is located in the vicinity of the region illuminated by the projection optical system 14. Another end of the alignment optical system 15 is split by a beam splitter into an output optical path and an input optical path. An image surface of a solid-state image sensor 16 is located ahead the output optical path. A luminous element 17 is provided at the entrance of the input optical path.

A transfer output from the solid-state image sensor 16 is supplied to a signal processing circuit 20 for detecting the position of an alignment mark. The result of detection at the signal processing circuit 19 is supplied to a position control unit 20. The position control unit 20 controls a stage driving mechanism 21 according to the detected position to adjust the position of the stage 13.

Fig. 2 is a diagram showing an internal configuration of the above-described solid-state image sensor 16.

Referring to Fig. 2, a plurality of photodiodes 31 are arranged in the form of a matrix on the image surface of the solid-state image sensor 16 (for simplicity of explanation, Fig. 2 shows 10 rows by 5 columns of photodiodes 31).

Vertical CCDs 32 are provided adjacent to each of the vertical columns of the photodiodes 31. Vertical transfer pulses φV1 through φV4 in four phases are applied to transfer electrodes of the vertical CCDs 32 from a vertical transfer circuit 33.

Referring to transfer electrodes to which the vertical pules φV2 and φV4 are applied, the electrodes are extended to transfer diffusions interposed between the photodiodes 31 and the vertical CCDs 32. As a result, those transfer electrodes also serve as transfer gate electrodes.

A horizontal CCD 34 is provided along output ends of the plurality of vertical CCDs 32. Diffusion layers of the horizontal CCD 34 are set at a width or depth such that each potential well is not saturated even when it accepts signal charges for four vertical pixels.

Horizontal transfer pulses φH1 and φH2 in two phases are applied to transfer electrodes of the horizontal CCD 34 from a horizontal transfer circuit 35. Transfer outputs from the horizontal CCD 34 are output to an external signal processing circuit 19 (Fig. 1) through an output amplifier or the like.

### (Correspondence between Claims and the First Mode for Carrying out the Invention)

A description will now be made on correspondence between the claims and the first mode for carrying out the invention.

Referring to correspondence between Claims 1 and 2 and the first mode for carrying out the invention, the light receiving pixels correspond to the photodiodes 31; the vertical CCDS correspond to the vertical CCDs 32; and the horizontal CCD corresponds to the horizontal CCD 34.

Referring to correspondence between Claims 4 and 5 and the first mode for carrying out the invention, in addition to the above-described correspondence; the vertical transfer circuit corresponds to the vertical transfer circuit 33, and the horizontal transfer circuit corresponds to the horizontal transfer circuit 35.

### (Operation of the First Mode for Carrying out the Invention)

Fig. 3 is a diagram showing timing for driving the solid-state image sensor 16 in the first mode for carrying out the invention. Fig. 4 is a diagram for explaining a charge transferring state of the solid-state image sensor 16 in the first mode for carrying out the invention.

An operation of the first mode for carrying out the invention will now be described with reference to Figs. 3 and 4.

The vertical transfer circuit 33 sets the vertical transfer pulses φV2 and φV4 at a high potential (e.g., 10 volts) at the timing of a vertical interval period T1 as shown in Fig. 3. Then, channels are formed between the photodiodes 31 and vertical CCDs 32 to transfer signal charges accumulated at the photodiodes 31 to the vertical CCDs 62 at a time.

Either of the vertical transfer pulse φV1 and φV3 is set at an intermediate potential (e.g., 2 volts) during the vertical interval period T1. As a result, a plurality of potential wells for three transfer electrodes are formed on the vertical CCDs 32. In each of the potential wells, signal charges for vertical two pixels transferred thereto are mixed to generate a two line mixture signal suitable for interlace scanning.

Next, the vertical transfer circuit 33 outputs one period of each of the transfer pulses in four phases at the timing of a first halt T2 of a horizontal interval period as shown in Fig. 3. Then, the potential wells on the vertical CCDs 32 are shifted toward the horizontal CCD 34 by two rows. At this time, mixture signals for the first and second rows are output from the vertical CCDs 32 to be transferred to the respective potential wells on the horizontal CCD34.

Subsequently, the vertical transfer circuit 33 outputs another period of each of the transfer pulses in four phases at the timing of a second half T2' of the horizontal interval period shown in Fig. 3. Then, the potential wells on the vertical CCDs 32 are shifted toward the horizontal CCD 34 by two rows.

At this time, mixture signals for the third and fourth rows are output from the vertical CCDs 32. As a result, mixture signals for the first through fourth rows are generated at the respective potential wells on the horizontal CCD 34.

Next, the horizontal transfer circuit 35 sets the horizontal transfer pulses φH1 and φH2 as transfer pulses in two phases at the timing of a horizontal scanning period T3 as shown in Fig. 3. Then, the mixture signals for the first through fourth rows are output in a serial manner from an output end of the horizontal CCD 34 (see Fig. 4A).

Next, the vertical transfer circuit 33 outputs one period of each of the transfer pulses in four phases at the timing of a first half T4 of a horizontal interval period as shown in Fig. 3. Then, the potential wells on the vertical CCDs 32 are shifted toward the horizontal CCD 34 by two rows. At this time, mixture signals for the fifth and sixth rows are output from the vertical CCDs 32 to be transferred to the respective potential wells on the horizontal CCD34.

Subsequently, the vertical transfer circuit 33 outputs another period of each of the transfer pulses in four phases at the timing of a second half T4' of the horizontal interval period shown in Fig. 3. Then, the potential wells on the vertical CCDs 32 are shifted toward the horizontal CCD 34 by two rows.

At this time, mixture signals for the seventh and eighth rows are output from the vertical CCDs 32. As a result, mixture signals for the fifth through eighth rows are generated at the respective potential wells on the horizontal CCD 34.

Next, the horizontal transfer circuit 35 sets the horizontal transfer pulses φH1 and φH2 as transfer pulses in two phases at the timing of a horizontal scanning period T5 as shown in Fig. 3. Then, the mixture signals for the first through fourth rows are output in a serial manner from the output end of the horizontal CCD 34 (see Fig. 4B).

Next, the vertical transfer circuit 33 outputs one period of each of the transfer pulses in four phases at the timing of a horizontal interval period T6 as shown in Fig. 3. Then, the potential wells on the vertical CCDs 32 are shifted toward the horizontal CCD 34 by two rows.

At this time, mixture signals for the ninth and tenth rows are output from the vertical CCDs 32 to be transferred to the respective potential wells on the horizontal CCD34.

Next, the horizontal transfer circuit 35 sets the horizontal transfer pulses φH1 and φH2 as transfer pulses in two phases at the timing of a horizontal scanning period T7 as shown in Fig. 3. Then, the mixture signals for the ninth and tenth rows are output in a serial manner from the output end of the horizontal CCD 34 (see Fig. 4C).

According to such a method of driving the solid-state image sensor 16, the mixture signals are in the following order. Specifically, the mixture signals for the first through fourth rows are output; the mixture signals for the fifth through eighth rows follow; and the mixture signals for the ninth and tenth rows follow.

The signal processing circuit 19 (Fig. 1) sequentially receives the above-described mixture signals to detect the phase of a wedge-shaped portion in the mixture signals. The position control unit 20 detects the current position of an alignment mark based on the wedge-shaped portion. The position control unit 20 controls the position of the stage driving mechanism 21 in the directions of X and Y axes such that the difference between the current position of the alignment mark and a target position is nullified, thereby adjusting the position of the stage 13.

### (Effects and the Like of the First Mode for Carrying out the Invention)

As described above, in the first mode for carrying out the invention, a horizontal transfer is performed after signal charges for four vertical pixels are mixed. This reduces the number of horizontal transfers from that in the example of the prior art (Fig. 16) to shorten the period for reading an image of an alignment mark.

Especially, since the exposure device 11 repeats such a process of reading an image of an alignment mark many times, the throughput of the exposure device 11 can be significantly improved.

In the first mode for carrying out the invention, noise components having no vertical correlation can be reduced during mixing of signal charges at the horizontal CCD 34. This eliminates any need for configurations such as the noise rejection circuit 70 (Fig. 15) and therefore makes it possible to simplify the configuration of an image sensing device.

Further, in the first mode for carrying out the invention, the number of horizontal lines is substantially halved unlike the operation of the noise rejection circuit 70 (Fig. 15). This reduces the amount of signal processing at the signal processing circuit 19 to make it possible to shorten the processing time required for position detection. The effect of reduction of such a period is especially significant for the exposure device 11 which repeats such signal processing many times. Therefore, such an effect of reducing processing time makes it possible to improve the throughput of the exposure device 11 significantly.

In the first mode for carrying out the invention, since vertical pixels are mixed within a limit such that no saturation of the horizontal CCD 34 occurs, any wedge-shaped portion in image signals is not lost. It is therefore possible to generate transfer outputs suitable for the adjustment of the position of the exposure device 11.

While a horizontal transfer is performed each time four vertical pixels are mixed on the horizontal CCD 34 in the first mode for carrying out the invention, the invention is not limited thereto. In general, the period required for reading an image can be reduced from that in the example of the prior art by performing a horizontal transfer each time three or more vertical pixels are mixed on the horizontal CCD 34.

While the above-described first mode for carrying out the invention has referred to a case wherein two vertical pixels are mixed on the vertical CCDs 32, the present invention is not limited thereto. For example, the mixing of signal charges may be performed only on the horizontal CCD 34. Further, it is obvious that the present invention is not limited to either interlace scanning or progressive scanning.

Further, while the above-described first mode for carrying out the invention has referred to an application of the invention to an inter-line transfer type solid-state image sensor 16, the present invention is not limited thereto. For example, the invention may be applied to a frame transfer type solid-state image sensor.

Further, while no mention was made on the direction of incidence of light upon a solid-sate image sensor in the above-described first mode for carrying out the invention, the present invention is applicable whether light is incident upon a front or back surface of a sensor according to the prior art.

While the above-described first mode for carrying out the invention has made no mention of the wavelength of light incident upon a solid-state image sensor, it is obvious that the present invention is not limited to any particular wavelength.

Another mode for carrying out the invention will now be described.

### 〈Second mode for Carrying out the Invention〉

The second mode for carrying out the invention is a mode for carrying out the invention corresponding to the inventions defined in Claims 1 through 6 and Claims 10 and 11.

Fig. 5 is a diagram showing a schematic configuration of the second mode for carrying out the invention.

The configuration of the second mode for carrying out the invention has the features as described in the following items (1) through (3).
(1) A transfer output from a solid-state image sensor 16 is supplied to a signal processing circuit 19 and a level detector 42.
(2) A peak detection output from the level detector 42 is received by a transfer control unit 43.
(3) The transfer control unit 43 controls the transfer operations of the vertical transfer circuit 33 and horizontal transfer circuit 35 in the solid-state image sensor 16.

Components in the second mode for carrying out the invention similar to those in the first mode for carrying out the invention (Figs. 1 and 2) are given like reference numbers and will not be described here. -

### (Correspondence between Claims and the Second Mode for Carrying out the Invention)

A description will now be made on correspondence between the claims and the second mode for carrying out the invention.

Referring to correspondence between Claims 1 through 3 and the second mode for carrying out the invention, the light receiving pixels correspond to photodiodes 31; the vertical CCDs correspond to vertical CCDs 32; and the horizontal CCD corresponds to a horizontal CCD 34.

Referring to correspondence between Claims 4 and 5 and the second mode for carrying out the invention, in addition to the above-described correspondence; the vertical transfer circuit corresponds to a vertical transfer circuit 33, and the horizontal transfer circuit corresponds to a horizontal transfer circuit 35.

Referring to correspondence between Claim 6 and the second mode for carrying out the invention, in addition to the above-described correspondence, the level detector corresponds to the level detector 42; and number adjustment means corresponds to the transfer control unit 43.

### (Operation of the Second Mode for Carrying out the Invention)

Fig. 6 is a flow chart for explaining an operation of the transfer control unit 43 in the second mode for carrying out the invention. The operation in the second mode for carrying out the invention will now be described by following the steps of operation shown in Fig. 6.

First, the transfer control unit 43 initializes the number N of vertical transfers at a value of, for example, "3" (S1 in Fig. 6).

Next, the transfer control unit 43 sets "the total number of vertical transfer operations in the solid-state image sensor 16" as the number Z of remaining transfers (S2 in Fig. 6).

In this state, the transfer control unit 43 controls the vertical transfer circuit 33 to transfer signal charges at the photodiodes 31 to the vertical CCDs 32 at a time (S3 in Fig. 6).

Next, the transfer control unit 43 controls the vertical transfer circuit 33 to perform N times of vertical transfers of signal charges repeatedly (S4 in Fig. 6).

Concurrently with such an operation, the transfer control unit 43 subtracts the number N of vertical transfers from the number Z of remaining transfers to update the number Z of remaining transfers (S5 in Fig. 6).

When such a repetitive vertical transfer operation is completed, mixture signals of signal charges are generated in potential wells on the horizontal CCD 34. In this state, the transfer control unit 43 controls the horizontal transfer circuit 35 to horizontally transfer the mixture signals on the horizontal CCD 34 (S6 in Fig. 6).

The level detector 42 receives a transfer output horizontally transferred from the horizontal CCD 34 to perform peak detection. The transfer control unit 43 acquires a peak level of the transfer output from the level detector 42 after when the horizontal transfer is completed (S7 in Fig. 6).

The transfer control unit 43 determines whether the peak level of the transfer output has reached a saturation value or not (S8 in Fig. 6).

If the peak level of the transfer output has reached the saturation value (YES at S8 in Fig. 6), the transfer control unit 43 decrements the number N of vertical transfers by 1 (S9 in Fig. 6), and the operation thereafter proceeds to step S12.

If the peak level of the transfer output has not reached the saturation value (NO at S8 in Fig. 6), the transfer control unit 43 determines whether the peak level of the transfer output is equal or smaller than a predetermined threshold (S10 in Fig. 6). The "predetermined threshold" is a value equivalent to a lower limit value of a proper peak level.

If the peak level of the transfer output is smaller than the threshold (YES at S10 in Fig. 6), the transfer control unit 43 increments the number N of vertical transfers by 1 (S11 in Fig. 6), and the operation thereafter proceeds to step S12.

If the peak level of the transfer output is equal to or greater than the threshold (NO at S10 in Fig. 6), it is determined that the signal level of the transfer output is within a proper range. Then, the transfer control unit 43 maintains the value of the number N of vertical transfers, and the operation proceeds to step S12.

After such adjustment of the number N of vertical transfers is completed, the transfer control unit 43 determines the value of the number Z of remaining transfers (S12 in Fig. 6). If the number Z is equal to or smaller than zero (NO at S12 in Fig. 6), the transfer control unit 43 determines that image readout for one screen has been completed, and the operation proceeds to step S2.

If the number Z is greater than zero (YES at S12 in Fig. 6), the transfer control unit 43 determines that image readout for one screen has not been completed, and the operation returns to step S4.

### (Effects and the Like of the Second Mode for Carrying out the Invention)

In the second mode for carrying out the invention, through the execution of a series of operations as described above, the number N of vertical transfers per one horizontal transfer is dynamically adjusted in accordance with the peak level of the transfer output. It is therefore possible to adjust the amount of signal charge mixing with flexibility in accordance with changes in the amount of incident light.

While the number of vertical transfers is adjusted such that no saturation of a transfer output from the horizontal CCD occurs in the above-described mode for carrying out the invention, the present invention is not limited thereto. For example, it may be preferable that the peak level of a transfer output is saturated at a constant level during detection of a wedge-shaped portion in the transfer output. In such a case, the number of vertical transfers may be adjusted such that the transfer output of the horizontal CCD is saturated provided that a semiconductor structure is provided to exhaust charges with which the horizontal CCD are saturated.

While the number N of vertical transfers is adjusted in accordance with a peak level in the above-described second mode for carrying out the invention, the present invention is not limited thereto. For example, the number N of vertical transfers may be adjusted in accordance with an average level or minimum value of a transfer output.

Another mode for carrying out the invention will now be described.

### 〈Third Mode for Carrying out the Invention〉

The third mode for carrying out the invention is a mode for carrying out the invention corresponding to the inventions defined in Claims 7, 10 and 11.

Fig. 7 is a diagram showing a configuration of an image sensing device 130 in the third mode for carrying out the invention.

Referring to Fig. 7, the image sensing device 130 is formed by an image sensor 130a and a pulse generation circuit 130b. A plurality of light receiving pixels 131 for generating pixel outputs (e.g., signal charges) in accordance with quantity of light are provided in the form of a matrix on a light receiving surface of the image sensor 130a.

A transfer gate 132 for reading electric charges is provided for each of the light receiving pixels 131. Further, vertical CCDs 133 is provided for each vertical column of light receiving pixels 131 with respective transfer gates 132 interposed therebetween.

Transfer pulses φV1 through φV4 in multiple phases are supplied to the vertical CCDs 133 from the pulse generation circuit 130b to transfer pixel outputs in the vertical direction. The transfer gates 132 may be implemented by extending transfer electrodes of the vertical CCDs 133 to the light receiving pixels 131 and by driving the transfer electrodes with three values.

Exhaust gates 135 are provided at the final stages of the vertical CCDs 133. A control signal φD for exhaust control is supplied to the exhaust gates 135 from the pulse generation circuit 130b to exhaust pixel outputs to an exhaust drain, the substrate and the like.

A horizontal CCD 134 is provided at the output ends of the vertical CCDs 133 with accumulation gates 136 interposed therebetween. A control signal φC for connecting and disconnecting the vertical CCDs 133 and horizontal CCD 134 is supplied to the accumulation gates 136 from the pulse generation circuit 130b.

Fig. 8 is a block diagram showing a configuration of an alignment device 140 having the image sensing device 130.

Referring to Fig. 8, the image sensor 130a is disposed in a position for picking up an image of an alignment mark. The above-described pulse generation circuit 130b for controlling an image reading operation is connected to a control terminal of the image sensor 130a.

An image output provided by the image sensor 130a is supplied to a microprocessor 142 through an analog-digital converter or the like. The microprocessor 142 varies the timing of pulse generation at the pulse generation circuit 130b.

### (Correspondence between the Invention and the Third Mode for Carrying out the Invention)

Correspondence between the present invention and the above-described configuration will now be described.

Referring to correspondence between the invention defined in Claim 7 and the third mode for carrying out the invention, the light receiving pixels correspond to the light receiving pixels 131; the vertical transfer paths corresponds to the transfer gates 132 and vertical CCDs 133; the horizontal transfer path corresponds to the horizontal CCD 134; the one-dimensional readout unit corresponds to the pulse generation circuit 130b; and the exhaust gates correspond to the exhaust gates 135.

Referring to correspondence between the invention defined in Claim 10 and the third mode for carrying out the invention, the image sensing device corresponds to the image sensor 130a, pulse generation circuit 130b and "a function of controlling reading of a one-dimensional image" of the microprocessor 142; and the alignment detecting unit corresponds to "a function of detecting alignment based on a one-dimensional image" of the microprocessor 142.

Referring to correspondence between the invention defined in Claim 11 and the third mode for carrying out the invention, the image pickup step corresponds to "a step of reading a one-dimensional image" performed by the image sensor 130a, pulse generation circuit 130b and microprocessor 142; the position detection step corresponds to "a step of detecting alignment based on a one-dimensional image" performed by the microprocessor 142; and the position adjustment step corresponds to "a step of adjusting the position of the exposure device in accordance with the result of alignment detection" performed by the microprocessor 142.

### (Operation of the Third Mode for Carrying out the Invention)

An operation of the third mode for carrying out the invention will now be described.

Fig. 9 is a flow chart of a one-dimensional readout operation performed by the image sensor 130 and alignment device 140.

First, the transfer gates 132 simultaneously open during period T1 as shown in Fig. 9. Then, pixel outputs generated at the light receiving pixels 131 are simultaneously transferred to the potential wells of the respective vertical CCDs 133 through the transfer gates 132.

Subsequently, transfer pulses φV1 through φV4 for vertical transfer are repeatedly supplied to the vertical CCDs 133 during a period T2 as shown in Fig. 9. As a result, the pixel outputs are sequentially transferred to the output ends of the vertical CCDs 133.

During the period T2, the exhaust gates 135 are normally closed, and the accumulation gates 136 are open. Therefore, the pixel outputs transferred to the final stages of the vertical CCDs 133 are accumulated one after another as they are in the respective potential wells on the horizontal CCD 134.

During the period T2, there is a point in time at which pixel outputs such as the centerline 182 shown in Fig. 17 enter the final stages. When a large image pickup range is set, there is a point in time at which pixel outputs of the peripheral pattern 183 shown in Fig. 17 enter the final stages.

The pulse generation circuit 130b inverts the control signals φC and φD at those points in time to open the exhaust gates 135 and to close the accumulation gates 136. As a result, heterogeneous pixel outputs are exhausted from the exhaust gates 135 instead of being transferred to the horizontal CCD 134.

Specific timing of an exhaust operation is determined in accordance with the pattern of an alignment mark.

Further, when the timing of an exhaust operation is to be determined with high accuracy, it is determined by timing at which a heterogeneous pixel output reaches an exhaust gate based on (1) the pattern of the alignment mark, (2) the image pickup range and (3) the scanning sequence.

As a result of a series of operations as described above, only homogeneous pixel outputs are added in each of the potential wells on the horizontal CCD 134 in the direction of the vertical columns.

Next, transfer pulses φH1 and φH2 for vertical transfer are supplied to the horizontal CCD 134 in a period T3 as shown in Fig. 9. The "sums of pixel outputs" accumulated on the horizontal CCD 134 are sequentially horizontally transferred by the transfer pulses to be externally output as image signals of the one-dimensional image.

The microprocessor 142 detects the position of an alignment mark based on the phase of the one-dimensional image. Further, the microprocessor 142 provides the exposure device with feedback of the difference between the current position of the alignment mark and a target position to control the position adjustment of the exposure device.

### (Effects and the Like of the Third Mode for Carrying out the Invention)

In the third mode for carrying out the invention, the above-described operation makes it possible to selectively exhaust pixel outputs under vertical transfer from the final stages of the vertical CCDs 133 through the exhaust gates 135. Therefore, it is possible to selectively exhaust heterogeneous pixel outputs which can reduce the quality of signals of a one-dimensional image and to thereby improve the quality of signals of a one-dimensional image.

While the accumulation gates 136 are provided in the above-described third mode for carrying out the invention, the present invention is not limited thereto. For example, the accumulation gates 136 may be deleted by exhausting pixel outputs at the final stages at timing when the vertical CCDs 133 and the horizontal CCD 134 are separated from each other as a result of a vertical transfer operation.

While the exhaust gates 135 are provided at the final stages of the vertical CCDs 133 in the above-described third mode for carrying out the invention, the present invention is not limited thereto. Exhaust gates may alternatively be provided at intermediate stages of the vertical CCDs 133.

While, pixel outputs are exhausted in the direction of the plane of the semiconductor substrate through the exhaust gates 135 in the above-described third mode for carrying out the invention, the present invention is not limited thereto. For example, pixel outputs may be exhausted in the direction of the depth of a semiconductor substrate.

While the control signal φD is commonly supplied to all of the exhaust gates 135 to exhaust pixel outputs for each horizontal line at a time in the above-described third mode for carrying out the invention, the present invention is not limited thereto. For example, an independent control signal may be applied to each individual exhaust gate 135 to control exhaust of each pixel. In this case, determination may be made on each pixel to see whether it can cause any reduction in the quality of a signal of a one-dimensional image, thereby allowing finer exhaust control.

Another mode for carrying out the invention will now be described.

### 〈Fourth Mode for Carrying out the Invention〉

The fourth mode for carrying out the invention is a mode for carrying out the invention corresponding to the inventions defined in Claims 7, 8, 10 and 11.

Since components of an image sensing device 130 and an alignment device 140 are the same as those in the third mode for the invention (Figs. 7 and 8), they are indicated by like reference numbers and will not be described here.

### (Correspondence between the Inventions and the Fourth Mode for Carrying out the Invention)

Correspondence between the inventions and the above-described configuration will be described.

Referring to correspondence between the invention defined in Claim 7 and the fourth mode for carrying out the invention, the light receiving pixels correspond to the light receiving pixels 131; the vertical transfer paths corresponds to transfer gates 132 and vertical CCDs 133; the horizontal transfer path corresponds to a horizontal CCD 134; the one-dimensional readout unit corresponds to a pulse generation circuit 130b and a microprocessor 142; and the exhaust gates correspond to exhaust gates 135.

Referring to correspondence between the invention defined in Claim 8 and the fourth mode for carrying out the invention, the two-dimensional readout unit corresponds to "a function of reading a two-dimensional image from an image sensor 130a" of the pulse generation circuit 130b and microprocessor 142; and the image analysis unit corresponds to "a function of detecting the positions of pixels having low vertical correlation from a pattern of a two-dimensional image" of the microprocessor 142.

Referring to correspondence between the invention defined in Claim 10 and the fourth mode for carrying out the invention, the image sensing device corresponds to the image sensor 130a, pulse generation circuit 130b and "a function of controlling readout of a one-dimensional image" of the microprocessor 142; and the alignment detecting unit corresponds to "a function of detecting alignment based on a one-dimensional image" of the microprocessor 142.

Referring to correspondence between the invention defined in Claim 11 and the fourth mode for carrying out the invention, the image pickup step corresponds to steps S21 through S30 in Fig. 10; the position detection step corresponds to step S31 in Fig. 10; and the position adjustment step corresponds to step S32 in Fig. 10.

### (Operation of the Fourth Mode for Carrying out the Invention)

Fig. 10 is a flow chart showing an operation of the microprocessor 142. An operation of the fourth mode for carrying out the invention will now be described following the step numbers shown in Fig. 10.

First, the microprocessor 142 reads a two-dimensional image from the image sensor 130a by the pulse generation circuit 130b (step S21).

The microprocessor 142 determines presence or absence of vertical correlation by performing comparison such as obtaining differences between horizontal lines of the two dimensional image (step S22).

As shown in Figs. 11A through 11C, the microprocessor 142 determines horizontal lines having low vertical correlation and stores them as "unnecessary lines" (step S23).

After the above-described operation is completed, the microprocessor 142 transfers pixel outputs generated at light receiving pixels 131 to the vertical CCDs 133 at a time through the pulse generation circuit 130b (step S24).

Next, the microprocessor 142 determines whether the next pixel outputs to be output from the vertical CCDs 133 are an unnecessary line or not (step S25).

If it is an unnecessary line (YES at step S25), the microprocessor 142 sets exhaust gates 135 in an open state and accumulation gates 136 in a closed state (step S26).

If it is not an unnecessary line (NO at step S25), the microprocessor 142 sets the exhaust gates 135 in a closed state and the accumulation gates in an open state (step S27).

After completing such gate setting, the microprocessor 142 supplies vertical transfer pulses φV1 through φV4 for one cycle to the image sensor 130a through the pulse generation circuit 130b. As a result, the pixel outputs on the vertical CCDs 133 are shifted in the vertical direction by one stage (step S28).

At this time, the pixel outputs of unnecessary lines are exhausted from the exhaust gates 135. Pixel outputs other than those of unnecessary lines are output and added to respective potential wells of the horizontal CCD 134.

When such one cycle of vertical transfers is completed, the microprocessor 142 determines whether vertical transfers for one screen have been completed or not (step S29).

If vertical transfers for one screen have not been completed (NO at step S29), the microprocessor 142 returns the operation to step S25 to repeat the above-described operation.

If vertical transfers for one screen have been completed (YES at step S29), pixel outputs which have been vertically added excluding those for unnecessary lines are accumulated in each of the potential wells of the horizontal CCD 134. In this state, the microprocessor 142 supplies horizontal transfer pulses φH1 and φH2 repeatedly to the image sensor 130a through the pulse generation circuit 130b. As a result, high quality one-dimensional image signals are sequentially output from the horizontal CCD134 (step S30).

The microprocessor 142 performs alignment detection based on phase information in the one-dimensional image signals (step S31).

The microprocessor 142 outputs a control signal based on the result of the alignment detection to adjust the position of the exposure device which is the object of the control (step S32).

### (Effects and the Like of the Fourth Mode for Carrying out the Invention)

In the fourth mode for carrying out the invention, the above-described operation detects the positions of pixels having low vertical correlation in a two-dimensional image and automatically detects the positions of heterogeneous pixels which can reduce the quality of one-dimensional image signals. It is therefore possible to eliminate complicated operations such as manual setting of exhaust timing by an operator.

In addition, determination of vertical correlation as described above makes it possible to specify foreign substances and scratches on a pattern. Since, in manual setting, pixel outputs such as foreign substances and scratches which are unexpected can also be exhausted, the quality of signals of a one-dimensional image can be further improved.

While the presence or absence of vertical correlation is determined from differences between adjoining horizontal lines or the like in the above-described fourth mode for carrying out the invention, the present invention is not limited thereto. For example, the presence or absence of vertical correlation may be determined by storing a horizontal line which is effective in generating a one-dimensional image as a reference pattern and by comparing other horizontal lines with the reference pattern.

A horizontal line effective for alignment detection is characterized in that it has a particular horizontal spatial frequency component. Therefore, it may be indirectly determined whether the position of each pixel of a two-dimensional image has vertical correlation with an effective horizontal line by determining whether the pixel has such a characteristic.

While exhaust control is performed for each horizontal line in the above-described fourth mode for carrying out the invention, the present invention is not limited thereto. Obviously, more precise exhaust control may be performed pixel by pixel.

Another mode for carrying out the invention will now be described.

### 〈Fifth Mode for Carrying out the Invention〉

The fifth mode for carrying out the invention is a mode for carrying out the invention corresponding to the inventions defined in Claims 7, 9, 10 and 11.

Fig. 12 is a block diagram showing a configuration of an alignment device 150 in the fifth mode for carrying out the invention.

Referring to Fig. 12, an image sensor 130a is provided in a position where an alignment mark is to be sense. A pulse generation circuit 130b for controlling an image readout operation is connected to a control terminal of the image sensor 130a.

An image output provided by the image sensor 130a is supplied to a microprocessor 152 through an analog-digital converter or the like. The microprocessor 152 varies the timing at which the pulse generation circuit 130b generates pulses.

Further, a database storage 153 constituted by a hard disk device or the like is connected to the microprocessor 152. Information on an alignment mark is stored in advance as a registered pattern in the database storage 153.

Since components in the image sensor 130a are the same as those in the third mode for carrying out the invention (Fig. 7), they are indicated by like reference numbers and will not be described here.

### (Correspondence between the Inventions and the Fifth Mode for Carrying out the Invention)

A description will now be made on correspondence between the inventions and the above-described configuration.

Referring to correspondence between the invention defined in Claim 7 and the fifth mode for carrying out the invention, the light receiving pixels correspond to light receiving pixels 131; the vertical transfer paths corresponds to transfer gates 132 and vertical CCDs 133; the horizontal transfer path corresponds to a horizontal CCD 134; the one-dimensional readout unit corresponds to the pulse generation circuit 130b and microprocessor 152; and the exhaust gates correspond to exhaust gates 135.

Referring to correspondence between the invention defined in Claim 9 and the fifth mode for carrying out the invention, the two-dimensional readout unit corresponds to "a function of reading a two-dimensional image from the image sensor 130a" of the pulse generation circuit 130b and microprocessor 152; and the unnecessary pixel specifying unit corresponds to "a function of performing pattern matching between a two-dimensional image and a registered pattern to specify the positions of unnecessary pixels" of the microprocessor 152.

Referring to correspondence between the invention defined in Claim 10 and the fifth mode for carrying out the invention, the image sensing device corresponds to the image sensor 130a, pulse generation circuit 130b and "a function of controlling readout of a one-dimensional image" of the microprocessor 152; and the alignment detecting unit corresponds to "a function of detecting alignment based on a one-dimensional image" of the microprocessor 152.

Referring to correspondence between the invention defined in Claim 11 and the fifth mode for carrying out the invention, the image pickup step corresponds to steps S24 through S30 in Fig. 13; the position detection step corresponds to step S31 in Fig. 13; and the position adjustment step corresponds to step S32 in Fig. 13.

### (Operation of the Fifth Mode for Carrying out the Invention)

Fig. 13 is a flow chart showing an operation of the microprocessor 152. An operation of the fifth mode for carrying out the invention will now be described following the step numbers shown in Fig. 13.

First, the microprocessor 152 reads a two-dimensional image from the image sensor 130a by the pulse generation circuit 130b (step S41).

The microprocessor 152 performs pattern matching between the two-dimensional image and a registered pattern in the database storage 153.

Referring to efficient algorithm for pattern matching, for example, sequential similarity detection algorithm, methods of obtaining a cross-correlation coefficient and structural matching methods are known ("Image Analysis Handbook" supervised by Mikio Takagi, Tokyo Daigaku Shuppankai, 1991).

Based on the result of such pattern matching, the microprocessor 152 specifies the type of an alignment mark and the accurate position of the alignment mark on the two-dimensional image (step S42).

Next, the microprocessor 152 reads predetermined information on "the positions of pixels unnecessary for the generation of a one-dimensional image" of the relevant alignment mark from the database storage 153. The pixel positions thus read out are subjected to coordinate transformation into positions of the alignment mark on the two-dimensional image to specify the positions of pixels which are unnecessary in practice on the two-dimensional image.

The microprocessor 152 determines and stores unnecessary lines based on the result of identification (step S43).

When such a process is completed, the microprocessor 152 performs the same operation as that in the fourth mode for carrying out the invention (steps S24 through S32 in Fig. 10) to read a high quality one-dimensional image, to detect alignment and to perform position adjustment.

In the fifth mode for carrying out the invention, through the above-described operation, pattern matching is carried out to automatically detect the positions of heterogeneous pixels which can reduce the quality of signals of a one-dimensional image. It is therefore possible to eliminate complicated operations such as manual setting of exhaust timing by an operator.

While exhaust control is performed for each horizontal line in the above-described fifth mode for carrying out the invention, the present invention is not limited thereto. Obviously, more precise exhaust control may be performed pixel by pixel.

While the above first through fifth modes for carrying out the invention have been described with reference to a configuration in which an image of an alignment mark on a stage is picked up, the present invention is not limited thereto. For example, alignment marks may be provided on both of a stage and a reticle, and a device according to the invention may pick up images of both of the marks in an overlapping relationship. In this case, any phase difference and the amount of any misalignment between those marks may be detected from spatial frequencies and phases of the overlapping images to match the positions of the stage and reticle relative to each other.

### INDUSTRIAL APPLICABILITY

### (Claims 1 and 4)

According to the inventions defined in Claims 1 and 4, a horizontal transfer is performed each time signal charges for three or more vertical pixels are mixed on a horizontal CCD. This makes it possible to eliminate at least one horizontal scanning period and to shorten the period required for reading an image of an alignment mark accordingly.

Especially, the effect of reducing such a period is significant for an exposure device because it repeats such a process of reading an image of an alignment mark many times.

Further, according to the present invention, signal charges are mixed on a horizontal CCD to reduce noise components having no vertical correlation. This eliminates any need for a noise rejection circuit 70 (Fig. 15) and the like and therefore makes it possible to simplify the configuration of a device as a whole.

Further, according to the invention, the number of horizontal lines transferred and output from a solid-state image sensor is reduced. This efficiently and adequately reduces burdens on subsequent steps associated with processing of transfer outputs (e.g., the amount of arithmetic processing for detecting the position of an alignment mark) to allow a further reduction of processing time.

Especially, the effect of reduction of such a period is especially significant for an exposure device which repeats such signal processing many times. Therefore, such an effect of reducing processing time also makes it possible to improve the throughput of an exposure device significantly.

### (Claims 2 and 5)

According to the inventions defined in Claims 2 and 5, since saturation of signal charges is avoided by setting an adequate number of vertical transfers, any wedge-shaped portion in transfer outputs is not lost. It is therefore possible to generate transfer outputs suitable for the adjustment of the position of an exposure device.

### (Claims 3 and 6)

According to the inventions defined in Claims 3 and 6, the number of vertical transfers per one horizontal transfer is increased or decreased in accordance with the signal level of transfer outputs from vertical CCDs. It is therefore possible to automatically adjust the amount of signal charge mixing on a horizontal CCD with flexibility in accordance with changes in the amount of incident light. It is therefore possible to automatically adjust the output level of a solid-state image sensor to an adequate level.

### (Claim 7)

An image sensing device as defined in Claim 7 can selectively exhaust pixel outputs under vertical transfer through exhaust gates. It is therefore possible to selectively exhaust heterogeneous pixel outputs which can reduce the quality of signals of a one-dimensional image and to thereby improve the quality of the signals of a one-dimensional image.

### (Claim 8)

An image sensing device as defined in Claim 8 detects the positions of pixels having low vertical correlation from a two-dimensional image read out on an experimental basis. It is therefore possible to automatically specify the positions of heterogeneous pixels which can reduce the quality of signals of a one-dimensional image.

Since exhaust timing of exhaust gates is determined based on the positions of such heterogeneous pixels, it is possible to eliminate complicated operations such as manual setting of the exhaust timing by an operator.

Especially, a two-dimensional image is generated here using the same light receiving pixels as those used for a one-dimensional image. Therefore, the present image sensing device can specify the positions of heterogeneous pixels with high positional accuracy.

In addition, determination of vertical correlation as described above also makes it possible to specify foreign substances and scratches on the pattern of interest, and extra peripheral patterns (patterns which are not vertically correlated) attributable to fluctuations of the image pickup range. Since, in manual setting, pixel outputs from even unexpected locations such as foreign substances and scratches can be reliably exhausted, a further improvement of the quality of signals of a one-dimensional image can be achieved.

### (Claim 9)

An image sensing device as defined in Claim 9 specifies the positions of pixels unnecessary for the generation of a one-dimensional image by performing pattern matching between "a two-dimensional image which has been read out on an experimental basis" and "a registered image".

Since the exhaust timing of exhaust gates is determined based on the positions of such unnecessary pixels, it is possible to eliminate complicated operations such as manual setting of the exhaust timing by an operator.

Especially, a two-dimensional image is generated here using the same light receiving pixels as those used for a one-dimensional image. Therefore, the present image sensing device can specify the positions of heterogeneous pixels with high positional accuracy.

### (Claims 10 and 11)

In an alignment device as defined in Claim 10 or a position adjustment method as defined in Claim 11, an image of an alignment mark is picked up using an image sensing device as defined in any one of Claims 4 through 9. Therefore, a high quality one-dimensional image can be acquired by the image sensing device, and the accuracy of alignment detection can be improved further.

## Claims

1. A method of driving a solid-state image sensor including a plurality of horizontally and vertically arranged light receiving pixels for generating signal charges in accordance with the quantity of light, vertical CCDs for vertically transferring said signal charges generated by said light receiving pixels, and a horizontal CCD for horizontally transferring said signal charges transferred through said vertical CCDs, comprising the step of:
a vertical transfer step for vertically transferring in sequence said signal charges generated by a light receiving part by driving said vertical CCDs; and
a horizontal transfer step for mixing said signal charges transferred through said vertical CCDs on said horizontal CCD and horizontally transferring said signal charges on said horizontal CCD when said signal charges for three or more vertical pixels are mixed.

2. A method of driving according to Claim 1, wherein said horizontal transfer step mixes said signal charges in a vertical direction with a limitation to the number of times the mixing is done being equal to or less than a number of vertical transfers which does not cause saturation of each potential well on said horizontal CCD.

3. A method of driving according to Claim 1, further comprising the step of:
a level detection step for monitoring a transfer output provided by said horizontal CCD to detect a signal level of said transfer output; and
a number adjustment step for increasing and decreasing the number of vertical transfers per one horizontal transfer in accordance with said signal level detected at said level detection step.

4. An image sensing device comprising:
a plurality of horizontally and vertically arranged light receiving pixels for generating signal charges in accordance with the quantity of light;
vertical CCDs for vertically transferring said signal charges generated by said light receiving pixels;
a horizontal CCD for horizontally transferring said signal charges transferred through said vertical CCDs;
a vertical transfer circuit for vertically transferring in sequence said signal charges generated at a light receiving part by driving said vertical CCDs; and
a horizontal transfer circuit for mixing said signal charges transferred through said vertical CCDs on said horizontal CCD and for horizontally transferring said signal charges on said horizontal CCD when said signal charges for three or more vertical pixels are mixed.

5. An image sensing device according to Claim 4, wherein said horizontal transfer circuit mixes said signal charges in a vertical direction with a limitation to the number of times the mixing is done being equal to or less than a number of vertical transfers which does not cause saturation of each potential well on said horizontal CCD.

6. An image sensing device according to Claim 4, further comprising:
a level detector for monitoring a transfer output provided by said horizontal CCD to detect a signal level of said transfer output; and
number adjustment means for increasing and decreasing the number of vertical transfers per one horizontal transfer in accordance with said signal level detected at said level detector.

7. An image sensing device comprising:
a plurality of light receiving pixels arranged on a two-dimensional basis on a light receiving surface for generating pixel outputs in accordance with the quantity of light;
a group of vertical transfer paths provided for each of vertical columns of said light receiving pixels for transferring said pixel outputs generated at said light receiving pixels in a vertical direction;
a horizontal transfer path for transferring pixel outputs provided by said group of vertical transfer paths in a horizontal direction;
a one-dimensional readout unit for adding said pixel outputs sequentially transferred by said group of vertical transfer paths in the vertical direction and for reading a pixel output as a result of the addition from said horizontal transfer path to generate a one-dimensional image; and
an exhaust gate for selectively exhausting pixel outputs being transferred in said vertical transfer paths, wherein
said one-dimensional readout unit exhausts said pixel outputs generated at predetermined pixel positions through said exhaust gate during said operation of generating a one-dimensional image.

8. An image sensing device according to Claim 7, further comprising:
a two-dimensional readout unit for transferring said pixel outputs of said light receiving pixels through said group of vertical transfer paths and said horizontal transfer path to generate a two-dimensional image prior to said operation of generating a one-dimensional image; and
an image analysis unit for receiving said two-dimensional image from said two-dimensional readout unit and for detecting the positions of pixels having low vertical correlation based on a pattern of said two-dimensional image, wherein
said pixel outputs generated at the positions of pixels having low vertical correlation and detected by said image analysis unit are exhausted through said exhaust gate during said operation of generating a one-dimensional image.

9. An image sensing device according to Claim 7, further comprising:
a two-dimensional readout unit for transferring said pixel outputs of said light receiving pixels through said group of vertical transfer paths and said horizontal transfer path to generate a two-dimensional image prior to said operation of generating a one-dimensional image; and
an unnecessary pixel specifying unit for performing pattern matching between said two-dimensional image and a registered pattern to find the type of said two-dimensional image or positional relationship, thereby specifying the positions of pixels unnecessary for the generation of a one-dimensional image which are defined in advance in said registered pattern, wherein
said pixel outputs generated at the positions of pixels unnecessary for the generation of a one-dimensional image specified by said unnecessary pixel specifying unit are exhausted through said exhaust gate during said operation of generating a one-dimensional image.

10. An alignment device comprising:
an image sensing device as defined in any one of Claims 4 through 9; and
an alignment detecting unit for picking up an image of an alignment mark using said image sensing device and for detecting alignment of an object whose image is to be picked up based on an image read out from said image sensing device.

11. A method of adjusting position comprising the step of:
an image pickup step for picking up an image of an alignment mark using an image sensing device as defined in any one of Claims 4 through 9 to generate an image signal;
a position detection step for finding the position of said alignment mark based on said image signal; and
a position adjustment step for controlling the position or an object whose image is to be picked up in accordance with the position of said alignment mark.
